# EUROPEAN PATENT APPLICATION

(11) **EP 3 845 781 A1**
(43) Date of publication of application: **07.07.2021**
(21) Application number: 19855509.6
(22) Date of filing: 09.08.2019
(51) Int. Cl.: F16J 15/3244, F16J 15/3204

(54) **SEALING DEVICE**

(30) Priority: 28.08.2018 JP 2018159411
(71) Applicant: NOK Corporation, Minato-ku, Tokyo 105-8585 (JP)
(72) Inventor: YONAI Hisato, Fukushima-shi, Fukushima 960-1193 (JP); YAMAGUCHI Yu, Fukushima-shi, Fukushima 960-1193 (JP)
(74) Representative: Global IP Europe Patentanwaltskanzlei
(86) International application number: PCT/JP2019/031758
(87) International publication number: WO 2020/045070

(57) **Abstract**

A sealing device includes a seal lip located inside a hole of an outer member and in slidable contact with the inner member. The seal lip has an inclined surface arranged on a side of the internal space, an atmosphere-side inclined surface, and a lip edge on a boundary between the inclined surfaces. Multiple first helical ribs and multiple second helical ribs extending from the lip edge and in contact with the outer peripheral surface of the inner member are formed on the atmosphere-side inclined surface. In addition, multiple first dike ribs and multiple second dike ribs are formed on the atmosphere-side inclined surface, which are arranged away from the lip edge and are not in contact with the inner member. The first dike ribs are arranged to intersect the extended lines of the first helical ribs, respectively, and are inclined in the opposite direction to the first helical ribs. The second dike ribs are arranged to intersect the extended lines of the second helical ribs, respectively, and are inclined in the opposite direction to the second helical ribs.

## Description

### TECHNICAL FIELD

The present invention relates to sealing devices disposed between relatively rotating inner members and outer members.

### BACKGROUND ART

Multiple helical ribs may be formed on an atmosphere-side surface of a seal lip of a sealing device disposed between a relatively rotating inner member and an outer member. This kind of sealing device is used for sealing a liquid (e.g., lubricant) located in an internal space of the outer member, and the helical ribs provide a function of returning liquid that leaked to the atmosphere side to the internal space (pumping action), as the inner member and the outer member rotate relative to each other.

If the inner member is rotatable in both directions, e.g., an axle of an automotive vehicle, or if the sealing device is deployable on either of the left and right axles of the automotive vehicle, helical ribs with different inclined directions may be formed on the seal lip in order to achieve the pumping action in both rotational directions.

### BACKGROUND DOCUMENTS

### Patent Document

Patent Document 1: JP-B-4702517

### SUMMARY OF THE INVENTION

It is desired to further reduce leakage of liquid from the internal space to the atmosphere in such a sealing device that achieves the pumping action in both rotational directions.

Accordingly, the present invention provides a sealing device that achieves a pumping action in both rotational directions and further reduces leakage of liquid from the internal space to the atmosphere side.

A sealing device according to an aspect of the present invention is a sealing device disposed between an inner member and an outer member that rotate relative to each other, for sealing a gap between the inner member and the outer member, the sealing device including: a mounted part to be mounted on the outer member; and a seal lip located inside a hole of the outer member, the seal lip being in slidable contact with an outer peripheral surface of the inner member for separating the internal space of the outer member from an atmosphere side to seal liquid within the internal space. The seal lip includes a liquid-side inclined surface arranged on a side of the internal space, an atmosphere-side inclined surface arranged on an atmosphere side, and a lip edge on a boundary between the liquid-side inclined surface and the atmosphere-side inclined surface and extending in a circumferential direction, the liquid-side inclined surface being inclined such that the more distant it is from the lip edge, the more distant it is from the inner member, the atmosphere-side inclined surface being inclined such that the more distant it is from the lip edge, the more distant it is from the inner member, multiple first helical ribs and multiple second helical ribs being formed on the atmosphere-side inclined surface, the first helical ribs extending from the lip edge and being in contact with the outer peripheral surface of the inner member, the second helical ribs extending from the lip edge and being in contact with the outer peripheral surface of the inner member, the multiple first helical ribs extending helically at an angle to the lip edge, the multiple second helical ribs extending helically at an angle to the lip edge in directions opposite to directions of the first helical ribs, multiple first dike ribs and multiple second dike ribs being formed on the atmosphere-side inclined surface, the first dike ribs being arranged away from the lip edge and being not in contact with the outer peripheral surface of the inner member, the second dike ribs being arranged away from the lip edge and being not in contact with the outer peripheral surface of the inner member, the multiple first dike ribs being arranged to intersect with extended lines of the multiple first helical ribs, respectively, and extending helically at an angle in directions opposite to directions of the first helical ribs, the multiple second dike ribs being arranged to intersect extended lines of the multiple second helical ribs, respectively, and extending helically at an angle in directions opposite to directions of the second helical ribs.

In this aspect, the pumping action is exerted in both rotational directions by the first helical ribs and the second helical ribs extending in different directions. That is, during rotation in a first direction, the first helical ribs return the liquid from the atmosphere side to the internal space, whereas during rotation in a second direction, the second helical ribs return the liquid from the atmosphere side to the internal space. However, during rotation in the first direction, the second helical ribs may conversely cause the liquid to leak from the internal space to the atmosphere side, whereas during rotation in the second direction, the first helical ribs may cause the liquid to leak from the internal space to the atmosphere side. During rotation in the second direction, the first dike ribs block the liquid leaked to the atmosphere side by the first helical ribs. Since the first dike ribs are not in contact with the outer circumferential surface of the inner member, an airflow due to rotation exists between the outer circumferential surface of the inner member and the first dike ribs during rotation in the second direction. The liquid leaked to the atmosphere side is moved along the first dike ribs toward the lip edge by the airflow, and it is further transferred to a second helical rib. The second helical rib returns the liquid transferred from the first dike ribs to the internal space. During rotation in the first direction, the second dike ribs block the liquid leaked to the atmosphere side by the second helical ribs. Since the second dike ribs are not in contact with the outer circumferential surface of the inner member, an airflow due to rotation exists between the outer circumferential surface of the inner member and the second dike ribs during rotation in the first direction. The liquid leaked to the atmosphere side is moved along the second dike ribs toward the lip edge by the airflow, and is further transferred to a first helical rib. The second helical rib returns the liquid transferred from the second dike rib to the internal space. Thus, since the first dike ribs and the second dike ribs, which are not in contact with the outer peripheral surface of the inner member, are provided, the liquid can be moved to a desired helical rib by utilizing the airflow, and leakage of the liquid from the internal space to the atmosphere side can be further reduced. Leakage of liquid from the internal space is more likely to occur as the rotation speed increases, but since the airflow also increases as the rotation speed increases, it is possible to return much of the leaked liquid to the internal space.

### BRIEF DESCRIPTION OF THE DRAWINGS

Fig. 1 is a partial cross-sectional view showing a sealing device according to any one of embodiments of the present invention;
Fig. 2 is an exploded view of the inner circumferential surface of a seal lip of the sealing device according to a first embodiment of the present invention;
Fig. 3 is a cross-sectional view of the seal lip corresponding to line III-III of Fig. 2;
Fig. 4 is view showing a return flow of liquid leaked through the lip edge of the seal lip;
Fig. 5 is an exploded view of the inner circumferential surface of a seal lip of the sealing device according to a second embodiment of the present invention;
Fig. 6 is a cross-sectional view of the seal lip corresponding to line VI-VI of Fig. 5; and
Fig. 7 is an exploded view of the inner peripheral surface of a seal lip of the sealing device according to a third embodiment of the present invention.

### DESCRIPTION OF EMBODIMENTS

Hereinafter, with reference to the accompanying drawings, multiple embodiments according to the present invention will be described. It is to be noted that the drawings are not necessarily to scale, and certain features may be shown exaggerated or omitted.

### FIRST EMBODIMENT

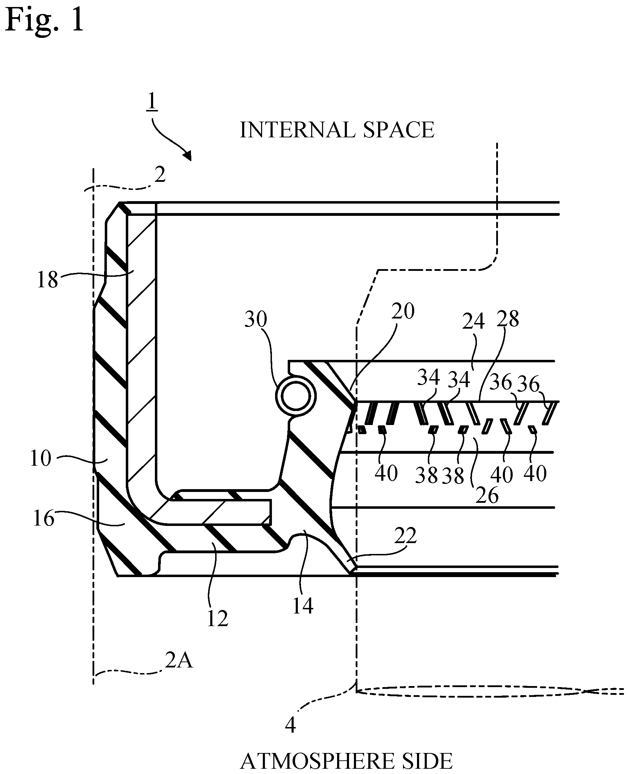

As shown in Fig. 1, a sealing device 1 according to a first embodiment of the present invention is disposed between a housing (outer member) 2 and a rotational shaft (inner member) 4, and it seals a gap between the housing 2 and the rotational shaft 4. A shaft hole 2A is formed in the housing 2, and a rotational shaft 4 is located in the shaft hole 2A. In the internal space of the housing 2, a liquid, i.e., oil, which is a lubricant, is located. Although the rotational shaft 4 is cylindrical, the shaft hole 2A is circular in cross section, and the sealing device 1 is annular; only the left halves thereof are shown in Fig. 1.

The sealing device 1 has an outer cylindrical part 10, a connecting part 12, and an inner cylindrical part 14. The outer cylindrical part 10 is a mounted part mounted on the housing 2. In the illustrated embodiment, the outer cylindrical part 10 is engaged by interference fit (that is, is press-fitted) into the shaft hole 2A. However, other mounting schemes may be used. The connecting part 12 is located on the atmosphere side of the outer cylindrical part 10, and connects the outer cylindrical part 10 and the inner cylindrical part 14.

The sealing device 1 is of a composite structure having an elastic ring 16 and a rigid ring 18. The elastic ring 16 is made of an elastic material such as an elastomer. The rigid ring 18 is made of a rigid material such as metal, and reinforces the elastic ring 16. The rigid ring 18 has a substantially L-shaped cross-sectional shape. A part of the rigid ring 18 is embedded in the elastic ring 16 and is in close contact with the elastic ring 16. Specifically, the rigid ring 18 is provided over the outer cylindrical part 10 and the connecting part 12.

The inner cylindrical part 14 is made of the elastic material only. A seal lip 20 and a dust lip 22, are formed in the inner cylindrical part 14. The seal lip 20 and the dust lip 22 are located inside the shaft hole 4A of the housing 2, and are in slidable contact with the outer peripheral surface of the rotational shaft 4.

The seal lip 20 separates the internal space of the housing 2 from the atmosphere side, and it seals the liquid in the internal space. In other words, the seal lip 20 serves to prevent the lubricant from flowing out.

The dust lip 22 is located on the atmosphere side of the seal lip 20, and serves to prevent the inflow of foreign matter (including water (including muddy water or salt water) and dust) from the atmosphere side into the internal space. The dust lip 22 is an inclined annular plate and extends obliquely from its proximal end toward the atmosphere side and radially inward.

The seal lip 20 is a protrusion formed on the inner peripheral surface of the inner cylindrical part 14, and has a liquid-side inclined surface 24 arranged on the side of the internal space, an atmosphere-side inclined surface 26 arranged on the atmosphere side, and a lip edge 28 extending in the circumferential direction at the boundary between the liquid-side inclined surface 24 and the atmosphere-side inclined surface 26. The liquid-side inclined surface 24 has a shape of the side surface of a truncated cone, and is inclined such that the more distant it is from the lip edge 28, the more distant it is from the rotational shaft 4. The atmosphere-side inclined surface 26 also has a shape of the side surface of a truncated cone, and is inclined such that the more distant it is from the lip edge 28, the more distant it is from the rotational shaft 4.

A garter spring 30 for compressing the seal lip 20 radially inward is wound around the outer peripheral surface of the inner cylindrical part 14. However, the garter spring 30 is not absolutely necessary.

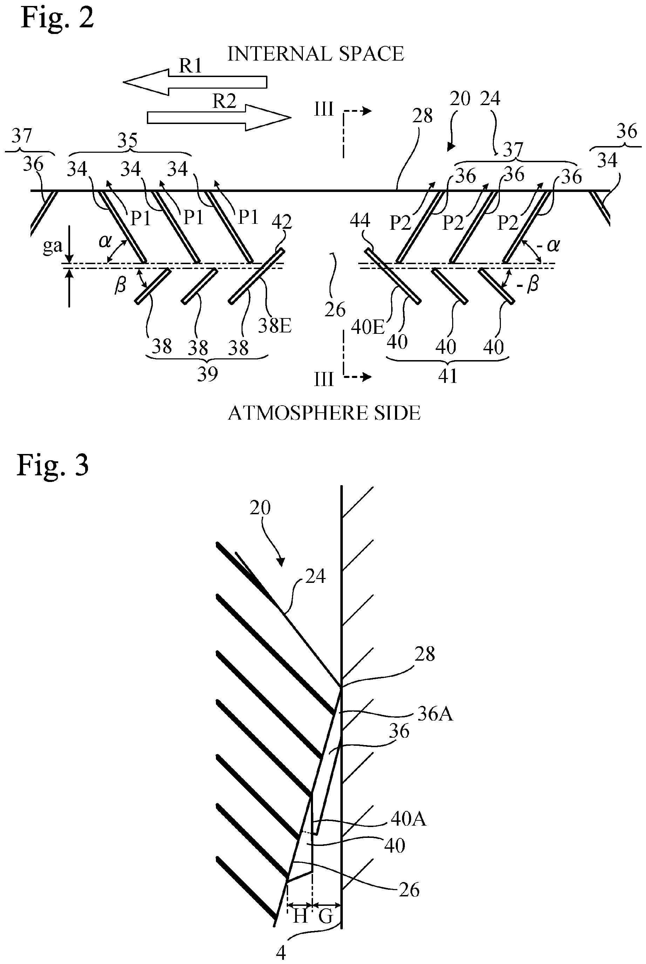

Fig. 2 is an exploded view of the inner peripheral surface of the seal lip 20. As shown in Fig. 2, multiple first helical ribs 34, multiple second helical ribs 36, multiple first dike ribs 38, and multiple second dike ribs 40 are formed on the atmosphere-side inclined surface 26. Although only a part of the inner circumferential surface of the seal lip 20 is shown in Fig. 2, multiple groups 35 each consisting of multiple first helical ribs 34 and multiple groups 37 each consisting of multiple second helical ribs 36 are provided on the atmosphere-side inclined surface 26, and the groups 35 and 37 are alternately arranged in the circumferential direction. In addition, multiple groups 39 each consisting of multiple first dike ribs 38, and multiple groups 41 each consisting of multiple second dike ribs 40, are provided on the atmosphere-side inclined surface 26, and the groups 39 and 41 are alternately arranged in the circumferential direction.

The first helical ribs 34 and the second helical ribs 36 extend from the lip edge 28 and helically extend at an angle to the lip edge 28. In this embodiment, the first helical ribs 34 and the second helical ribs 36 are linear ridges. The second helical rib 36 extends at an angle in directions opposite to the inclined directions of the first helical rib 34. That is, the first helical ribs 34 have an inclination angle α with respect to the lip edge 28, and the second helical ribs 36 have an inclination angle -α with respect to the lip edge 28.

The first helical ribs 34 and the second helical ribs 36 are brought into contact with the outer circumferential surface of the rotational shaft 4. Fig. 3 shows a state in which a second helical rib 36 is brought in contact with the outer peripheral surface of the rotational shaft 4. As shown in Fig. 3, the second helical rib 36 has a uniform height along the longitudinal direction of the second helical rib 36, but a portion 36A in contact with the outer peripheral surface of the rotational shaft 4 is elastically deformed. Although not shown, each of the first helical ribs 34 similarly has a uniform height along the longitudinal direction, but a portion in contact with the outer peripheral surface of the rotational shaft 4 is elastically deformed.

The first helical ribs 34 and the second helical ribs 36, which are continuous from the lip edge 28, provide a pumping action for returning the liquid leaked through the lip edge 28 to the atmosphere side to the internal space as the rotational shaft 4 rotates. The first helical ribs 34 and the second helical ribs 36 of different inclined directions are formed on the seal lip 20 in order that the pumping action be achieved in both rotational directions if the rotational shaft 4 is rotatable in both directions, for example, in the case of an axle of an automotive vehicle, or if the sealing device 1 is deployable on either of the left and right axles of an automotive vehicle. Specifically, when the rotational shaft 4 rotates in a first direction R1 of Fig. 2, the first helical ribs 34 return the liquid from the atmosphere side to the internal space as indicated by arrows P1. Conversely, when the rotational shaft 4 rotates in a second direction R2, the second helical ribs 36 return the liquid from the atmosphere side to the internal space as indicated by arrows P2. It is understood that such a pumping action is caused by minute convexities and concavities on the atmosphere-side inclined surface 26, and that the helical ribs 34 and 36 facilitate the pumping action by the directions in which the helical ribs 34 and 36 extend, respectively.

However, when the rotational shaft 4 rotates in the first direction R1, the second helical ribs 36 may cause the liquid to leak from the internal space to the atmosphere side along the directions opposite to arrows P2, and when the rotational shaft 4 rotates in the second direction R2, the first helical ribs 34 may cause the liquid to leak from the internal space to the atmosphere side in the directions opposite to arrows P1. Such leakage is understood to be caused by minor deformations of the helical ribs 34 and 36 or reduction in the constriction force of the helical ribs 34 and 36 to the rotational shaft 4. The leakage of the liquid is more likely to occur as the rotation speed of the rotational shaft 4 increases. Although the amount of leakage of the liquid is less than the amount by which the liquid is returned by the pumping action, the leakage of the liquid from the internal space to the atmosphere side is further reduced by the first dike ribs 38 and the second dike ribs 40 in accordance with the present embodiment, as described below.

Each of the first dike ribs 38 and the second dike ribs 40 is spaced apart from the lip edge 28, and it extends helically at an angle relative to the lip edge 28. In this embodiment, the first dike ribs 38 and the second dike ribs 40 are straight ridges. The second dike ribs 40 extend at an angle in directions opposite to the inclined directions of the first dike ribs 38. That is, the first dike ribs 38 have an inclination angle β with respect to the lip edge 28, and the second dike ribs 40 have an inclination angle -β with respect to the lip edge 28.

The group 39 of first dike ribs 38 overlaps the group 35 of first helical ribs 34 along the axial direction of the rotational shaft 4, whereas the group 41 of second dike ribs 40 overlaps the group 37 of second helical ribs 36 along the axial direction of the rotational shaft 4. Multiple first dike ribs 38 are arranged so as to intersect extended lines of multiple first helical ribs 34, respectively, and extend helically in an inclined manner in directions opposite to the directions of the first helical ribs 34. Multiple second dike ribs 40 are arranged so as to intersect with extended lines of multiple second helical ribs 36, respectively, and extend helically in an inclined manner in directions opposite to the directions of the second helical rib 36.

The first dike ribs 38 and the second dike ribs 40 are not in contact with the outer peripheral surface of the rotational shaft 4. Fig. 3 shows a state in which a second dike rib 40 is not in contact with the outer peripheral surface of the rotational shaft 4. As shown in Fig. 3, the surface 40A of the second dike rib 40 facing the rotational shaft 4 is separated from the outer peripheral surface of the rotational shaft 4 and extends in parallel with the outer peripheral surface. A clearance G exists between the surface 40A and the rotational shaft 4. Although not shown, the surface of the first dike rib 38 facing the rotational shaft 4 is also spaced apart from the outer peripheral surface of the rotational shaft 4 and extends in parallel with the outer peripheral surface.

Among the multiple first dike ribs 38, the first dike rib 38 that is closest to the multiple second dike ribs 40 is referred to as first end dike rib 38E. As shown in Fig. 2, the end 42 of the first end dike rib 38E on the side of the lip edge 28 is closer to the lip edge 28 than the ends of the multiple first helical ribs 34 on the atmosphere side, whereas the end of the first end dike rib 38E on the atmosphere side is farther from the lip edge 28 than the ends of the multiple first helical ribs 34 on the atmosphere side. In other words, the first end dike rib 38E partially overlaps the first helical ribs 34 in the circumferential direction. Among the multiple second dike ribs 40, the second dike rib 40 closest to the multiple first dike ribs 38 is referred to as a second end dike rib 40E. The end 44 of the second end dike rib 40E on the side of the lip edge 28 is closer to the lip edge 28 than the ends of the multiple second helical ribs 36 on the atmosphere side, whereas the end of the second end dike rib 40E on the atmosphere side is farther from the lip edge 28 than the ends of the multiple second helical ribs 36 on the atmosphere side. In other words, the second end dike rib 40E partially overlaps the second helical ribs 36 in the circumferential direction.

On the other hand, the ends on the side of the lip edge 28 and the ends on the atmosphere side of the first dike ribs 38 other than the first end dike rib 38E are farther from the lip edge 28 than the ends on the atmosphere side of multiple first helical ribs 34. There is a clearance ga between the ends of the first dike ribs 38 other than the first end dike rib 38E on the side of the lip edge 28 and the ends of the first helical ribs 34 on the atmosphere side. In other words, the entirety of the first dike ribs 38 does not overlap the first helical ribs 34 in the circumferential direction, and is located farther from the lip edge 28 than the first helical ribs 34. The ends on the side of the lip edge 28 and the ends on the atmosphere side of the second dike ribs 40 other than the second end dike rib 40E are farther from the lip edge 28 than the ends on the atmosphere side of multiple second helical ribs 36. There is a clearance ga between the ends of the second dike ribs 40 other than the second end dike rib 40E on the side of the lip edge 28 and the ends of the second helical ribs 36 on the atmosphere side. In other words, the entirety of the second dike ribs 40 does not overlap the second helical ribs 36 in the circumferential direction, but it is located farther from the lip edge 28 than the second helical ribs 36.

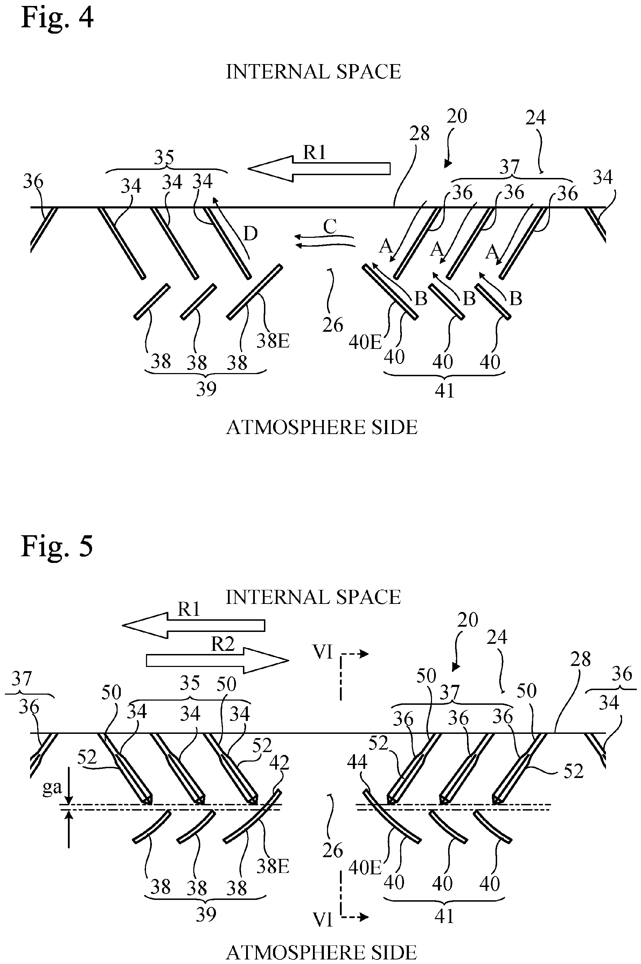

In this configuration, as described above, it is assumed that when the rotational shaft 4 rotates in the first direction R1, the second helical ribs 36 cause the liquid to leak from the internal space to the atmosphere side in the direction opposite to arrows P2. In Fig. 4, arrows A indicate flows of the liquid that the second helical ribs 36 cause to leak out of the internal space. When the rotational shaft 4 rotates in the first direction R1, the second dike ribs 40, crossing extended lines of the second helical ribs 36, block the liquid leaked to the atmosphere side by the second helical ribs 36.

In addition, since the second dike ribs 40 are not in contact with the outer peripheral surface of the rotational shaft 4, when the rotational shaft 4 rotates in the first direction R1, an airflow due to rotation exists in the clearance G (see Fig. 3) between the outer peripheral surface of the rotational shaft 4 and the second dike ribs 40. The airflow is guided from the atmosphere side toward the lip edge 28 by the second dike ribs 40, as indicated by arrows B. The liquid leaked to the atmosphere side is moved toward the lip edge 28 along the second dike ribs 40 by the airflow.

Furthermore, in the region between the group 37 of second helical ribs 36 and the group 35 of first helical ribs 34, the liquid is moved circumferentially by the airflow, as indicated by arrows C, to reach a first helical rib 34. As described above, when the rotational shaft 4 rotates in the first direction R1, the first helical ribs 34 return the liquid from the atmosphere side to the internal space by pumping action (see arrows P1 in Fig. 2). Therefore, as indicated by arrow D in Fig. 4, the liquid is returned to the internal space along the first helical rib 34. Thus, since the second dike ribs 40, which are not in contact with the outer peripheral surface of the rotational shaft 4, are provided, the liquid can be moved to a first helical rib 34 by utilizing the airflow, and the leakage of the liquid from the internal space to the atmosphere side can be further reduced. The leakage of the liquid from the internal space is more likely to occur as the rotation speed of the rotational shaft 4 is higher, but the airflow is also faster as the rotation speed is higher, so that it is possible to return much of the leaked liquid to the internal space.

Conversely, when the rotational shaft 4 rotates in the second direction R2 and the first helical ribs 34 cause the liquid to leak from the internal space to the atmosphere side in the direction opposite to arrows P1, the first dike ribs 38 block the liquid leaked to the atmosphere side by the first helical ribs 34. Since the first dike ribs 38 are not in contact with the outer peripheral surface of the rotational shaft 4, when the rotational shaft 4 rotates in the second direction R2, an airflow due to rotation exists between the outer peripheral surface of the rotational shaft 4 and the first dike ribs 38. The liquid leaked to the atmosphere side is moved toward the lip edge along the first dike ribs 38 by this airflow, and it is transferred to a second helical rib 36. The second helical rib 36 returns the liquid transferred from the first dike ribs 38 to the second helical rib 36 to the internal space. Thus, since the first dike ribs, which are not in contact with the outer peripheral surface of the inner member, are provided, the liquid can be moved to a second helical rib 36 by utilizing the airflow, and the leakage of the liquid from the internal space to the atmosphere side can be further reduced.

The first end dike rib 38E and the second end dike rib 40E, similarly to the other first dike ribs 38 and the other second dike ribs 40, may not overlap the first helical ribs 34 and the second helical ribs 36 in the circumferential direction. Even in this case, liquid can be transferred between the group 35 and the group 37 by means of an airflow (airflow indicated by arrows C in the case of rotation in the first direction R1).

However, in this embodiment, since the second end dike rib 40E partially overlaps the second helical ribs 36 in the circumferential direction, when the rotational shaft 4 rotates in the first direction R1, the second end dike rib 40E can receive a large amount of liquid leaked to the atmosphere side by the second helical ribs 36 and can transfer the liquid to the neighboring first helical rib 34. In addition, since the first end dike rib 38E partially overlaps with the first helical ribs 34 in the circumferential direction, when the rotational shaft 4 rotates in the second direction R2, the first end dike rib 38E can receive a large amount of liquid leaked to the atmosphere side by the first helical ribs 34 and can transfer the liquid to the neighboring second helical rib 36.

Furthermore, in this embodiment, the entireties of at least some of the first dike ribs 38 are located farther from the lip edge 28 than the multiple first helical ribs 34. Also, the entireties of at least some of the second dike ribs 40 are located farther from the lip edge 28 than multiple second helical ribs 36. Since the first dike ribs 38 and the second dike ribs 40 are formed on the atmosphere-side inclined surface 26, it is less probable that portions of the first dike ribs 38 and the second dike ribs 40 that are farther from the lip edge 28 will come into contact with the rotational shaft 4. Even when the seal lip 20 is worn, the first dike ribs 38 and the second dike ribs 40 are less likely to come into contact with the rotational shaft 4. From another viewpoint, it is possible to increase the height H of the first dike ribs 38 and the second dike ribs 40 with respect to the atmosphere-side inclined surface 26 (see Fig. 3) to improve the transfer efficiency of the liquid by the airflow.

### SECOND EMBODIMENT

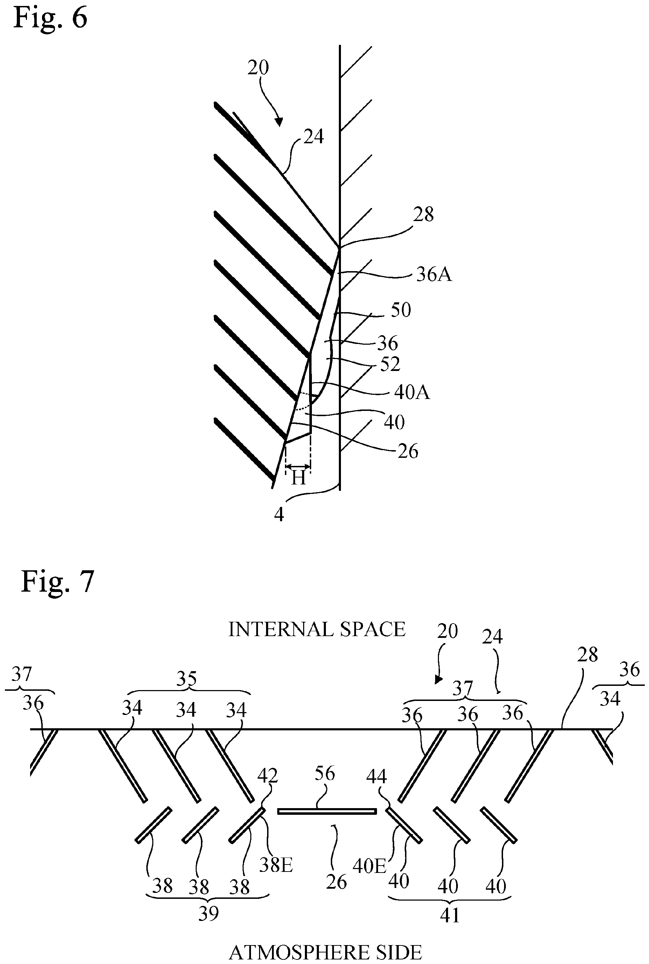

Fig. 5 is an exploded view of the inner peripheral surface of the seal lip 20 of a sealing device according to a second embodiment of the present invention. Fig. 6 is a cross-sectional view of the seal lip 20 corresponding to the VI-VI of Fig. 5. In Fig. 5 and subsequent drawings, the same reference symbols are used to identify components already described, and such components will not be described in detail.

In this embodiment, each of the first helical ribs 34 and the second helical ribs 36 has a straight portion 50 and a ship-bottom shaped portion 52. The straight portion 50, which is a portion called a "parallel screw" in Patent Document 1, extends linearly and has side edges parallel to each other as shown in Fig. 5. The ship-bottom shaped portion 52, which is a portion called a "ship bottom screw" in Patent Document 1, has a shape of a ship bottom. In other words, as shown in Fig. 5, the width of the ship-bottom shaped portion 52 gradually increases from one end along the longitudinal direction of the ship-bottom shaped portion 52, and gradually decreases from the center portion toward the other end. In each helical rib, the straight portion 50 and the ship-bottom shaped portion 52 are arranged in series, whereas the straight portion 50 continues from the lip edge 28, and the ship-bottom shaped portion 52 is arranged on the atmosphere side.

As shown in Fig. 6, the straight portion 50 has a uniform height along the longitudinal direction of the straight portion 50, but a portion 36A that is in contact with the outer peripheral surface of the rotational shaft 4 is elastically deformed. The ship-bottom shaped portion 52 has an arc-shaped profile with a high center. In the initial state, the ship-bottom shaped portion 52 is not in contact with the outer circumferential surface of the rotational shaft 4, but when the seal lip 20 is worn, the ship-bottom shaped portion 52 comes into contact with the outer circumferential surface of the rotational shaft 4. Therefore, even if the straight portion 50 is worn and the pumping action by the straight portion 50 is reduced, the ship-bottom shaped portion 52 compensates for the reduction of the pumping action. The height H of the dike ribs 38 and 40 is designed so that the dike ribs 38 and 40 are not in contact with the outer peripheral surface of the rotational shaft 4 even when the ship-bottom shaped portion 52 is considerably worn.

As shown in Fig. 5, each of the first dike ribs 38 and the second dike ribs 40 has a curved shape.

Other features are the same as those of the first embodiment, and the second embodiment can achieve the same effects as those of the first embodiment.

### THIRD EMBODIMENT

Fig. 7 is an exploded view of the inner peripheral surface of the seal lip 20 of a sealing device according to a third embodiment of the present invention.

In this embodiment, multiple circumferential-direction dike ribs 56 are formed on the atmosphere-side inclined surface 26. The circumferential-direction dike ribs 56 are located between neighboring groups 39 and 41. Specifically, the circumferential-direction dike rib 56 is located between the end 42 of the first end dike rib 38E and the end 44 of the second end dike rib 40E. Thus, when liquid is transferred between the group 35 and the group 37 by the airflow (airflow indicated by arrows C in Fig. 2 in the case of rotation in the first direction R1), the liquid more reliably reaches the desired group.

In Fig. 7, the circumferential-direction dike rib 56 is not connected to the first end dike rib 38E or the second end dike rib 40E, but it may be connected to the first end dike rib 38E and the second end dike rib 40E.

The circumferential-direction dike ribs 56 may be formed on the atmosphere-side inclined surface 26 of the seal lip 20 according to the second embodiment.

### OTHER MODIFICATIONS

Although embodiments of the present invention have been described, the foregoing description is not intended to limit the present invention. Various modifications including omission, addition, and substitution of structural elements may be made within the scope of the present invention.

For example, in the embodiments described above, the sealing device 1 is disposed between the housing (outer member) 2 and the rotational shaft (inner member) 4. However, the sealing device 1 may be disposed between a rotating outer member and a stationary inner member.

The shape and dimensions of the helical ribs and dike ribs may vary.

Aspects of the present invention are also set out in the following numbered clauses:

Clause 1. A sealing device, disposed between an inner member and an outer member that rotate relative to each other, for sealing a gap between the inner member and the outer member, the sealing device comprising:
a mounted part to be mounted on the outer member; and
a seal lip located inside a hole of the outer member, the seal lip being in slidable contact with an outer peripheral surface of the inner member for separating the internal space of the outer member from an atmosphere side to seal liquid within the internal space,
the seal lip comprising a liquid-side inclined surface arranged on a side of the internal space, an atmosphere-side inclined surface arranged on an atmosphere side, and a lip edge on a boundary between the liquid-side inclined surface and the atmosphere-side inclined surface and extending in a circumferential direction,
the liquid-side inclined surface being inclined such that the more distant it is from the lip edge, the more distant it is from the inner member,
the atmosphere-side inclined surface being inclined such that the more distant it is from the lip edge, the more distant it is from the inner member,
multiple first helical ribs and multiple second helical ribs being formed on the atmosphere-side inclined surface, the first helical ribs extending from the lip edge and being in contact with the outer peripheral surface of the inner member, the second helical ribs extending from the lip edge and being in contact with the outer peripheral surface of the inner member,
the multiple first helical ribs extending helically at an angle to the lip edge, the multiple second helical ribs extending helically at an angle to the lip edge in directions opposite to directions of the first helical ribs,
multiple first dike ribs and multiple second dike ribs being formed on the atmosphere-side inclined surface, the first dike ribs being arranged away from the lip edge and being not in contact with the outer peripheral surface of the inner member, the second dike ribs being arranged away from the lip edge and being not in contact with the outer peripheral surface of the inner member,
the multiple first dike ribs being arranged to intersect with extended lines of the multiple first helical ribs, respectively, and extending helically at an angle in directions opposite to directions of the first helical ribs, the multiple second dike ribs being arranged to intersect extended lines of the multiple second helical ribs, respectively, and extending helically at an angle in directions opposite to directions of the second helical ribs.

Clause 2. The sealing device according to clause 1, wherein the multiple first dike ribs comprise a first end dike rib that is closest to the multiple second dike ribs among the multiple first dike ribs, the first end dike rib having a lip-edge-side end that is closer to the lip edge than atmosphere-side ends of the multiple first helical ribs, the first end dike rib having an atmosphere-side end that is more distant from the lip edge than atmosphere-side ends of the multiple first helical ribs, and
wherein the multiple second dike ribs comprising a second end dike rib that is closest to the multiple first dike ribs among the multiple second dike ribs, the second end dike rib having a lip-edge-side end that is closer to the lip edge than atmosphere-side ends of the multiple second helical ribs, the second end dike rib having an atmosphere-side end that is more distant from the lip edge than atmosphere-side ends of the multiple second helical ribs.

According to this clause, since the first end dike rib partially overlaps with the first helical ribs in the circumferential direction, during rotation in the second direction, the first end dike rib can receive a large amount of liquid leaked to the atmosphere side by the first helical ribs and can transfer the liquid to the neighboring second helical rib. In addition, since the second end dike rib partially overlaps with the second helical ribs in the circumferential direction, during rotation in the first direction, the second end dike rib can receive a large amount of liquid leaked to the atmosphere side by the second helical ribs and can transfer the liquid to the neighboring first helical rib.

Clause 3. The sealing device according to clause 1 or 2, wherein lip-edge-side ends and atmosphere-side ends of at least some first dike ribs among the multiple first dike ribs are more distant from the lip edge than atmosphere-side ends of the multiple first helical ribs, and
wherein lip-edge-side ends and atmosphere-side ends of at least some second dike ribs among the multiple second dike ribs are more distant from the lip edge than atmosphere-side ends of the multiple second helical ribs.

According to this clause, the entireties of at least some of the first dike ribs is located farther from the lip edge than the multiple first helical ribs. Since the first dike ribs are formed on the atmosphere-side inclined surface, it is less probable that portions of the first dike ribs that are farther from the lip edge will come into contact with the inner member. Even when the seal lip is worn, the first dike ribs are less likely to come into contact with the inner member. From another point of view, it is possible to increase the height of the first dike ribs with respect to the atmosphere-side inclined surface to improve the transfer efficiency of the liquid by the airflow. Furthermore, the entireties of at least some of the second dike ribs is located farther from the lip edge than the multiple second helical ribs. Since the second dike ribs are formed on the atmosphere-side inclined surface, it is less probable that portions of the second dike ribs that are farther from the lip edge will come into contact with the inner member. Even when the seal lip is worn, the second dike ribs are less likely to come into contact with the inner member. From another point of view, it is possible to increase the height of the second dike ribs with respect to the atmosphere-side inclined surface to improve the transfer efficiency of the liquid by the airflow.

### REFERENCE SYMBOLS

1: Sealing device
10: Outer cylindrical part (mounted part)
20: Seal lip
24: Liquid-side inclined surface
26: Atmospheric-side inclined surface
28: Lip edge
34: First helical rib
36: Second helical rib
38: First dike rib
38E: First end dike rib
40: Second dike rib
40E: Second end dike rib
R1: First direction
R2: Second direction

## Claims

1. A sealing device, disposed between an inner member and an outer member that rotate relative to each other, for sealing a gap between the inner member and the outer member, the sealing device comprising:
a mounted part to be mounted on the outer member; and
a seal lip located inside a hole of the outer member, the seal lip being in slidable contact with an outer peripheral surface of the inner member for separating the internal space of the outer member from an atmosphere side to seal liquid within the internal space,
the seal lip comprising a liquid-side inclined surface arranged on a side of the internal space, an atmosphere-side inclined surface arranged on an atmosphere side, and a lip edge on a boundary between the liquid-side inclined surface and the atmosphere-side inclined surface and extending in a circumferential direction,
the liquid-side inclined surface being inclined such that the more distant it is from the lip edge, the more distant it is from the inner member,
the atmosphere-side inclined surface being inclined such that the more distant it is from the lip edge, the more distant it is from the inner member,
multiple first helical ribs and multiple second helical ribs being formed on the atmosphere-side inclined surface, the first helical ribs extending from the lip edge and being in contact with the outer peripheral surface of the inner member, the second helical ribs extending from the lip edge and being in contact with the outer peripheral surface of the inner member,
the multiple first helical ribs extending helically at an angle to the lip edge, the multiple second helical ribs extending helically at an angle to the lip edge in directions opposite to directions of the first helical ribs,
multiple first dike ribs and multiple second dike ribs being formed on the atmosphere-side inclined surface, the first dike ribs being arranged away from the lip edge and being not in contact with the outer peripheral surface of the inner member, the second dike ribs being arranged away from the lip edge and being not in contact with the outer peripheral surface of the inner member,
the multiple first dike ribs being arranged to intersect with extended lines of the multiple first helical ribs, respectively, and extending helically at an angle in directions opposite to directions of the first helical ribs, the multiple second dike ribs being arranged to intersect extended lines of the multiple second helical ribs, respectively, and extending helically at an angle in directions opposite to directions of the second helical ribs.

2. The sealing device according to claim 1, wherein the multiple first dike ribs comprise a first end dike rib that is closest to the multiple second dike ribs among the multiple first dike ribs, the first end dike rib having a lip-edge-side end that is closer to the lip edge than atmosphere-side ends of the multiple first helical ribs, the first end dike rib having an atmosphere-side end that is more distant from the lip edge than atmosphere-side ends of the multiple first helical ribs, and
wherein the multiple second dike ribs comprising a second end dike rib that is closest to the multiple first dike ribs among the multiple second dike ribs, the second end dike rib having a lip-edge-side end that is closer to the lip edge than atmosphere-side ends of the multiple second helical ribs, the second end dike rib having an atmosphere-side end that is more distant from the lip edge than atmosphere-side ends of the multiple second helical ribs.

3. The sealing device according to claim 1 or 2, wherein lip-edge-side ends and atmosphere-side ends of at least some first dike ribs among the multiple first dike ribs are more distant from the lip edge than atmosphere-side ends of the multiple first helical ribs, and
wherein lip-edge-side ends and atmosphere-side ends of at least some second dike ribs among the multiple second dike ribs are more distant from the lip edge than atmosphere-side ends of the multiple second helical ribs.
